# EUROPÄISCHE PATENTANMELDUNG

(11) **EP 4 459 490 A1**
(43) Veröffentlichungstag der Anmeldung: **06.11.2024**
(21) Anmeldenummer: 23171035.1
(22) Anmeldetag: 02.05.2023
(51) Int. Cl.: G06F 21/60, H04L 9/08

(54) **DATENÜBERTRAGUNG ZWISCHEN ZWEI DATENVERARBEITUNGSEINHEITEN**

(71) Anmelder: Siemens Aktiengesellschaft, 80333 München (DE)
(72) Erfinder: Gebhardt, Wolfgang, 91413 Neustadt/Aisch (DE); Haasch, Axel, 91056 Erlangen (DE); Hardes, Hubert, 91052 Erlangen (DE); Neuner, Jens, 91330 Eggolsheim (DE); Pfister, Alexander, 91330 Eggolsheim (DE)
(74) Vertreter: Siemens Patent Attorneys

(57) **Zusammenfassung**

Die Erfindung betrifft ein Verfahren zur Datenübertragung zwischen zwei Datenverarbeitungseinheiten (100, 200). Dabei wird ein geheimer Schlüssel erzeugt, der geheime Schlüssel wird mit einem von einem ersten externen Speichermedium (10) bereitgestellten Zusatzschlüssel (12) verschlüsselt und der verschlüsselte geheime Schlüssel (14) wird auf dem ersten externen Speichermedium (10) gespeichert. Auf einer ersten Datenverarbeitungseinheit (100) gespeicherte Daten (1) werden mit dem geheimen Schlüssel verschlüsselt und die mit dem geheimen Schlüssel verschlüsselten Daten (2) werden einer zweiten Datenverarbeitungseinheit (200) bereitgestellt. Der verschlüsselte geheime Schlüssel (14) und der Zusatzschlüssel (12) werden von der zweiten Datenverarbeitungseinheit (200) aus dem ersten externen Speichermedium (10) gelesen und der verschlüsselte geheime Schlüssel (14) wird von der zweiten Datenverarbeitungseinheit (200) mittels des Zusatzschlüssels (12) entschlüsselt. Die mit dem geheimen Schlüssel verschlüsselten Daten (2) werden von der zweiten Datenverarbeitungseinheit (200) mittels des geheimen Schlüssels entschlüsselt.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein Verfahren zur Datenübertragung zwischen zwei Datenverarbeitungseinheiten.

Insbesondere betrifft die Erfindung die Übertragung sensibler Daten, zu deren Lesen eine Leseberechtigung erforderlich ist, zwischen zwei Datenverarbeitungseinheiten. Derartige Daten werden vor der Übertragung von einer ersten Datenverarbeitungseinheit auf eine zweite Datenverarbeitungseinheit durch eine Verschlüsselung gesichert. Datenverarbeitungseinheit entschlüsselt werden. Dazu muss der zweiten Datenverarbeitungseinheit der Schlüssel zum Entschlüsseln der Daten bekannt sein beziehungsweise bekannt gemacht werden.

Der Erfindung liegt die Aufgabe zugrunde, ein Verfahren zur Datenübertragung zwischen zwei Datenverarbeitungseinheiten anzugeben, das hinsichtlich der Verschlüsselung und Entschlüsselung zu übertragender Daten verbessert ist. Dabei muss berücksichtigt werden, dass die verarbeiteten Daten integritätsgeschützt sein müssen.

Die Aufgabe wird erfindungsgemäß durch ein Verfahren mit den Merkmalen des Anspruchs 1 gelöst.

Vorteilhafte Ausgestaltungen der Erfindung sind Gegenstand der Unteransprüche.

Bei dem erfindungsgemäßen Verfahren werden Daten von einer ersten Datenverarbeitungseinheit auf eine zweite Datenverarbeitungseinheit übertragen, wobei
- ein geheimer Schlüssel erzeugt wird,
- der geheime Schlüssel mit einem von einem ersten externen Speichermedium bereitgestellten Zusatzschlüssel verschlüsselt wird und der verschlüsselte geheime Schlüssel auf dem ersten externen Speichermedium gespeichert wird,
- auf der ersten Datenverarbeitungseinheit gespeicherte Daten mit dem geheimen Schlüssel verschlüsselt werden und die mit dem geheimen Schlüssel verschlüsselten Daten der zweiten Datenverarbeitungseinheit bereitgestellt werden,
- der verschlüsselte geheime Schlüssel und der Zusatzschlüssel von der zweiten Datenverarbeitungseinheit aus dem ersten Speichermedium gelesen werden,
- der verschlüsselte geheime Schlüssel von der zweiten Datenverarbeitungseinheit mittels des Zusatzschlüssels entschlüsselt wird, und
- die mit dem geheimen Schlüssel verschlüsselten Daten von der zweiten Datenverarbeitungseinheit mittels des geheimen Schlüssels entschlüsselt werden.

Das erfindungsgemäße Verfahren sieht also vor, die von der ersten Datenverarbeitungseinheit auf die zweite Datenverarbeitungseinheit zu übertragenden Daten vor der Datenübertragung mit einem geheimen Schlüssel zu verschlüsseln. Der zweiten Datenverarbeitungseinheit werden die verschlüsselten Daten bereitgestellt. Die zweite Datenverarbeitungseinheit benötigt daher den geheimen Schlüssel, um die Daten zu entschlüsseln.

Zur Entschlüsselung der Daten sieht die Erfindung ein erstes Speichermedium vor. Das erste Speichermedium stellt einen Zusatzschlüssel zum Verschlüsseln des geheimen Schlüssels bereit. Mit dem Zusatzschlüssel wird der geheime Schlüssel verschlüsselt und der verschlüsselte geheime Schlüssel wird auf dem ersten Speichermedium gespeichert. Der verschlüsselte geheime Schlüssel wird also ausschließlich und vorzugsweise kopiergeschützt auf dem ersten Speichermedium gespeichert und ist damit an das erste Speichermedium gebunden.

Damit können die verschlüsselten Daten mittels des ersten Speichermediums entschlüsselt werden, ohne den geheimen Schlüssel zu kennen.

Bei einer Ausgestaltung der Erfindung werden die mit dem geheimen Schlüssel verschlüsselten Daten der zweiten Datenverarbeitungseinheit bereitgestellt, indem die verschlüsselten Daten zunächst von der ersten Datenverarbeitungseinheit auf das erste externe Speichermedium oder auf ein zweites externes Speichermedium kopiert werden und der zweiten Datenverarbeitungseinheit durch das erste externe Speichermedium oder das zweite externe Speichermedium bereitgestellt werden.

Gemäß der vorgenannten Ausgestaltung der Erfindung werden die verschlüsselten Daten also auf dem ersten externen Speichermedium oder einem zweiten externen Speichermedium gespeichert. Dadurch werden die Daten auf dem ersten externen Speichermedium oder dem zweiten externen Speichermedium gesichert und können außerdem durch das erste externe Speichermedium oder das zweite externe Speichermedium verschiedenen Datenverarbeitungseinheiten bereitgestellt werden.

Bei einer weiteren Ausgestaltung der Erfindung ist der Zusatzschlüssel ein Salt. Das Salt ist beispielsweise eine bestimmte auf dem ersten externen Speichermedium gespeicherte Zeichenfolge, beispielsweise eine Seriennummer des ersten externen Speichermediums. Alternativ ist das Salt eine von dem ersten externen Speichermedium erzeugte Zufallszeichenfolge (zufällige Zeichenfolge). Vorzugsweise genügt das Salt international anerkannten beziehungsweise empfohlenen Richtlinien, die einen Mindestsicherheitsstandard festlegen.

Dabei ist die Erzeugung des Salt als eine Zufallszeichenfolge durch das erste externe Speichermedium gegenüber einer bestimmten auf dem ersten externen Speichermedium gespeicherten Zeichenfolge als Salt bevorzugt, insbesondere wenn das erste externe Speichermedium zum Verschlüsseln verschiedener geheimer Schlüssel verwendet wird. In dem Fall kann nämlich für jeden zu verschlüsselnden geheimen Schlüssel eine Zufallszeichenfolge als Salt erzeugt werden, wodurch die Sicherheit der Verschlüsselung des geheimen Schlüssels vorteilhaft erhöht wird.

Bei einer weiteren Ausgestaltung der Erfindung wird der Zusatzschlüssel in einem sicheren Speicherbereich des ersten externen Speichermediums gespeichert. Unter einem sicheren Speicherbereich wird hier ein so genannter Secure-Speicherbereich verstanden, der insbesondere kopiergeschützt ist.

Bei einer weiteren Ausgestaltung der Erfindung wird der geheime Schlüssel von der ersten Datenverarbeitungseinheit erzeugt und in einem sicheren Speicherbereich der ersten Datenverarbeitungseinheit gespeichert.

Die Speicherung des geheimen Schlüssels in einem sicheren Speicherbereich der ersten Datenverarbeitungseinheit erhöht vorteilhaft die Sicherheit der Verschlüsselung der Daten.

Bei einer weiteren Ausgestaltung der Erfindung wird der geheime Schlüssel in einem sicheren Speicherbereich der zweiten Datenverarbeitungseinheit gespeichert.

Die Speicherung des geheimen Schlüssels in einem sicheren Speicherbereich der zweiten Datenverarbeitungseinheit erhöht ebenfalls vorteilhaft die Sicherheit der Verschlüsselung der Daten.

Bei einer weiteren Ausgestaltung der Erfindung ist das erste externe Speichermedium eine Speicherkarte, insbesondere eine Speicherkarte mit einem sicheren Speicherbereich, in dem der verschlüsselte geheime Schlüssel gespeichert wird. Das zweite externe Speichermedium kann ebenfalls eine Speicherkarte sein. Alternativ ist das zweite externe Speichermedium eine beliebige andere Speicherablage, beispielsweise eine Festplatte.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Blockdiagramm einer Verschlüsselung von Daten gemäß einem Ausführungsbeispiel des erfindungsgemäßen Verfahrens,
- FIG 2: ein Blockdiagramm der Entschlüsselung von Daten gemäß einem Ausführungsbeispiel des erfindungsgemäßen Verfahrens.

Einander entsprechende Teile sind in den Figuren mit denselben Bezugszeichen versehen.

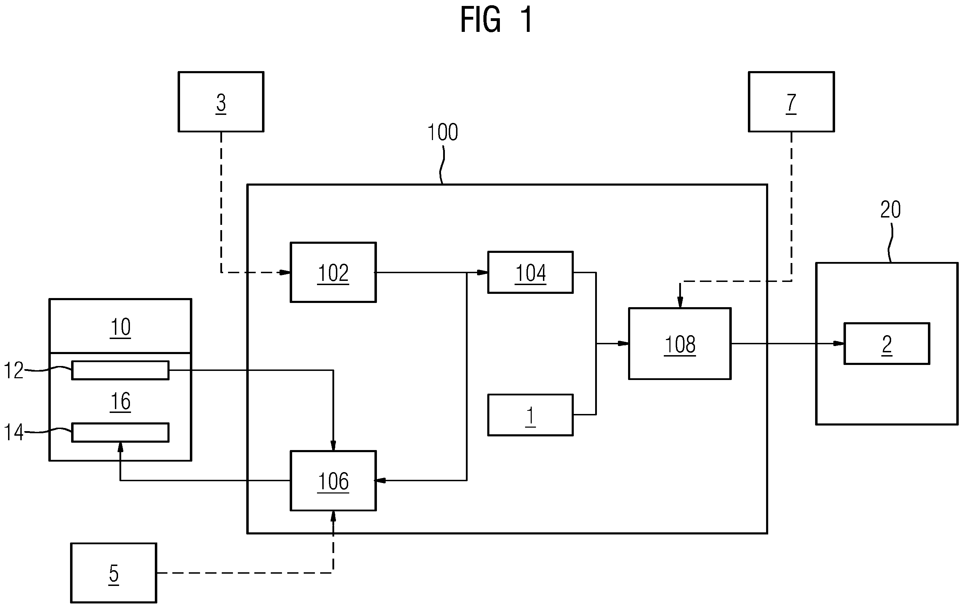

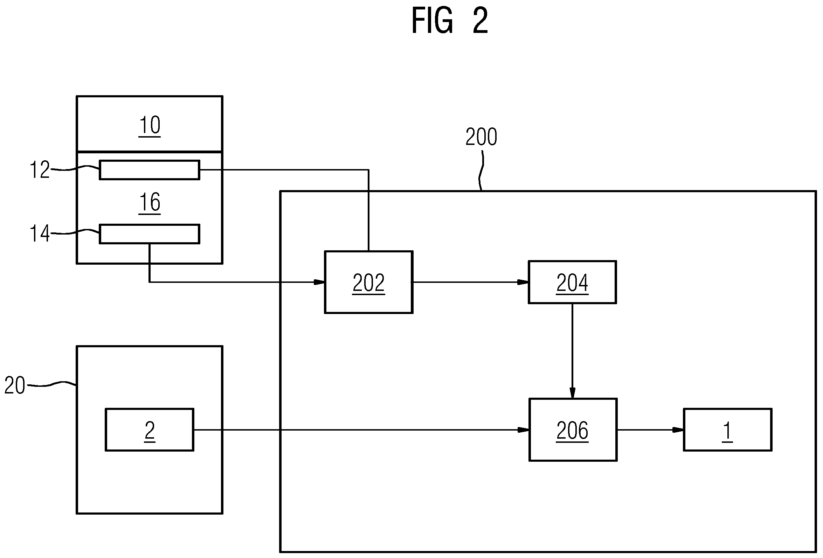

Die Figuren 1 und 2 zeigen ein Ausführungsbeispiel des erfindungsgemäßen Verfahrens zur Datenübertragung von einer ersten Datenverarbeitungseinheit 100 auf eine zweite Datenverarbeitungseinheit 200. Bei dem Verfahren werden die zu übertragenden Daten 1 von der ersten Datenverarbeitungseinheit 100 verschlüsselt und die verschlüsselten Daten 2 werden von der zweiten Datenverarbeitungseinheit 200 entschlüsselt. FIG 1 zeigt ein Blockdiagramm der Verschlüsselung der Daten und FIG 2 zeigt ein Blockdiagramm der Entschlüsselung der Daten 1.

Zum Verschlüsseln der Daten 1 wird von der ersten Datenverarbeitungseinheit 100 mit einer Methode 102 ein geheimer Schlüssel erzeugt. Die Methode 102 wird durch eine Benutzereingabe 3 eines Benutzers der ersten Datenverarbeitungseinheit 100 aufgerufen.

Der geheime Schlüssel wird in einem sicheren Speicherbereich 104 der ersten Datenverarbeitungseinheit 100 gespeichert.

Um den geheimen Schlüssel auf einem ersten externen Speichermedium 10 zu sichern, wird der geheime Schlüssel von der ersten Datenverarbeitungseinheit 100 mit einer Methode 106 aus dem sicheren Speicherbereich 104 der ersten Datenverarbeitungseinheit 100 ausgelesen und mit einem von dem ersten externen Speichermedium 10 zur Verfügung gestellten Zusatzschlüssel 12 verschlüsselt. Der verschlüsselte geheime Schlüssel 14 wird in einem sicheren Speicherbereich 16 des ersten externen Speichermediums 10 gespeichert. Die Methode 106 wird durch eine Benutzereingabe 5 eines Benutzers der ersten Datenverarbeitungseinheit 100 aufgerufen. Der Zusatzschlüssel 12 ist beispielsweise ein Salt. Das Salt kann eine bestimmte auf dem ersten externen Speichermedium 10 gespeicherte Zeichenfolge oder eine von dem ersten externen Speichermedium 10 erzeugte Zufallszeichenfolge sein.

Die Daten 1 werden mit einer Methode 108 mit dem geheimen Schlüssel verschlüsselt. Dazu wird der geheime Schlüssel aus dem sicheren Speicherbereich 104 der ersten Datenverarbeitungseinheit 100 gelesen. Die Methode 108 wird durch eine Benutzereingabe 7 eines Benutzers der ersten Datenverarbeitungseinheit 100 aufgerufen.

Die verschlüsselten Daten 2 werden auf ein zweites externes Speichermedium 20 kopiert.

Zum Übertragen der Daten 1 auf die zweite Datenverarbeitungseinheit 200 werden das erste externe Speichermedium 10 und das zweite externe Speichermedium 20 mit der zweiten Datenverarbeitungseinheit 200 verbunden.

Von der zweiten Datenverarbeitungseinheit 200 werden der verschlüsselte geheime Schlüssel 14 und der Zusatzschlüssel 12 von der zweiten Datenverarbeitungseinheit 200 aus dem ersten externen Speichermedium 10 gelesen. Anschließend wird der verschlüsselte geheime Schlüssel 14 von der zweiten Datenverarbeitungseinheit 200 mit einer Methode 202 entschlüsselt und der geheime Schlüssel wird in einem sicheren Speicherbereich 204 der zweiten Datenverarbeitungseinheit 200 gespeichert.

Mit dem geheimen Schlüssel werden die aus dem zweiten externen Speichermedium 20 gelesenen verschlüsselten Daten 2 von der zweiten Datenverarbeitungseinheit 200 mit einer Methode 206 entschlüsselt und die entschlüsselten Daten 1 werden von der zweiten Datenverarbeitungseinheit 200 gespeichert.

Jede Methode 102, 106, 108, 202, 206 ist ein Computerprogramm, das auf der jeweiligen Datenverarbeitungseinheit 100, 200 ausgeführt wird.

Das anhand der Figuren 1 und 2 beschriebene Verfahren kann beispielsweise dahingehend abgewandelt werden, dass die verschlüsselten Daten 2 auf das erste externe Speichermedium 10 statt das zweite externe Speichermedium 20 kopiert werden und von der zweiten Datenverarbeitungseinheit 200 aus dem ersten externen Speichermedium 10 gelesen werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffs sind Personen mit männlicher, weiblicher oder anderer Geschlechteridentität mit umfasst.

## Patentansprüche

1. Verfahren zur Datenübertragung zwischen zwei Datenverarbeitungseinheiten (100, 200), wobei
- ein geheimer Schlüssel erzeugt wird,
- der geheime Schlüssel mit einem von einem ersten externen Speichermedium (10) bereitgestellten Zusatzschlüssel (12) verschlüsselt wird und der verschlüsselte geheime Schlüssel (14) auf dem ersten externen Speichermedium (10) gespeichert wird,
- auf einer ersten Datenverarbeitungseinheit (100) gespeicherte Daten (1) mit dem geheimen Schlüssel verschlüsselt werden und die mit dem geheimen Schlüssel verschlüsselten Daten (2) einer zweiten Datenverarbeitungseinheit (200) bereitgestellt werden,
- der verschlüsselte geheime Schlüssel (14) und der Zusatzschlüssel (12) von der zweiten Datenverarbeitungseinheit (200) aus dem ersten externen Speichermedium (10) gelesen werden,
- der verschlüsselte geheime Schlüssel (14) von der zweiten Datenverarbeitungseinheit (200) mittels des Zusatzschlüssels (12) entschlüsselt wird, und
- die mit dem geheimen Schlüssel verschlüsselten Daten (2) von der zweiten Datenverarbeitungseinheit (200) mittels des geheimen Schlüssels entschlüsselt werden.

2. Verfahren nach Anspruch 1, wobei die mit dem geheimen Schlüssel verschlüsselten Daten (2) der zweiten Datenverarbeitungseinheit (200) bereitgestellt werden, indem die verschlüsselten Daten (2) zunächst von der ersten Datenverarbeitungseinheit (100) auf das erste externe Speichermedium (10) oder auf ein zweites externes Speichermedium (20) kopiert werden und der zweiten Datenverarbeitungseinheit (200) durch das erste externe Speichermedium (10) oder das zweite externe Speichermedium (20) bereitgestellt werden.

3. Verfahren nach Anspruch 1 oder 2, wobei der Zusatzschlüssel (12) ein Salt ist.

4. Verfahren nach Anspruch 3, wobei das Salt eine bestimmte auf dem ersten externen Speichermedium (10) gespeicherte Zeichenfolge ist.

5. Verfahren nach Anspruch 3, wobei das Salt eine von dem ersten externen Speichermedium (10) erzeugte Zufallszeichenfolge ist.

6. Verfahren nach einem der vorhergehenden Ansprüche, wobei der verschlüsselte geheime Schlüssel (14) in einem sicheren Speicherbereich (16) des ersten externen Speichermediums (10) gespeichert wird.

7. Verfahren nach einem der vorhergehenden Ansprüche, wobei der geheime Schlüssel von der ersten Datenverarbeitungseinheit (100) erzeugt und in einem sicheren Speicherbereich (104) der ersten Datenverarbeitungseinheit (100) gespeichert wird.

8. Verfahren nach einem der vorhergehenden Ansprüche, wobei der geheime Schlüssel in einem sicheren Speicherbereich (204) der zweiten Datenverarbeitungseinheit (200) gespeichert wird.

9. Verfahren nach einem der vorhergehenden Ansprüche, wobei das erste externe Speichermedium (10) eine Speicherkarte ist.
